# EUROPEAN PATENT APPLICATION

(11) **EP 1 085 681 A1**
(43) Date of publication of application: **21.03.2001**
(21) Application number: 99307279.2
(22) Date of filing: 14.09.1999
(51) Int. Cl.: H04B 7/185, H04Q 7/38

(54) **Mobile cellular radiocommunication system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An interface (52) is provided between a satellite telephone system (4) and a cellular telephone system (5) for allowing calls to a user's cellular telephone to be diverted to a satellite telephone (25) when the user is unable to use his cellular telephone, for example when on board an aeroplane (2) fitted with a satellite telephone system (20). The user inserts a card (which may be the SIM of his mobile phone, or a card compatible with existing satellite telephone equipment) into a suitable reader in the satellite telephone (20), which causes the satellite ground station's card verification system (42) to connect to a host cellular network (50).

The host cellular network has an interface unit (520 which emulates the operation of a normal base station, so that the host cellular system (50) acts as if the mobile user's terminal is roaming on the host network, but is currently "busy". The interface (52) also resets the user's existing call diversion instructions so that when the host cellular system (5) receives a busy tone from the base station emulator (52), it routes calls to the directory number of the terminal (20).

## Description

This invention relates to cellular radio systems, and in particular to a system for allowing the use of a mobile cellular telephone to be used on board an aircraft or other vehicle when the use of the fixed base stations of a cellular telephone system is impractical or not permitted.

In a cellular radio system one or more mobile radio telephones may establish a radio connection with one of a number of fixed radio transceivers, connected to a telephone switching system, and are thus able to set up and make telephone calls. Arrangements are made such that if the mobile telephone moves out of range of the fixed radio transceiver, connection with the switching system can be maintained or resumed by a "handover" process, by which the mobile telephone establishes radio contact with another fixed radio transceiver.

It is known to provide cellular radio coverage on board a vehicle such as a railway train using a passive fibre optic network or similar. Connections from several mobile telephones on board the vehicle are fed to a single repeater antenna on the vehicle which communicates with the nearest cellular radio fixed base station to the vehicle. Handover from one fixed base station to another is handled for all mobile units together by a vehicle-borne repeater unit. This system reduces signalling overload when several mobile units on the vehicle enter a new cell at the same time, possibly at high speed. However, as the repeater co-operates with the fixed base transceivers of the cellular system, it cannot be used outside the range of such transceivers.

There would be a number of practical difficulties in using a standard cellular telephone in the air. Firstly, although reliable handover of a mobile unit can be achieved from moving vehicles travelling at speeds of up to 200km/h, a typical passenger aircraft travels at speeds approaching 1000 km/h. Moreover, frequency re-use patterns, which allow several base stations to use the same radio frequencies without interference, are designed on the assumption that a mobile unit served by one base station is not able to exchange radio signals with other base stations using the same frequency. This assumption ceases to be valid if a mobile unit is several thousand metres above the ground, and in line-of-sight of a large number of base stations simultaneously. On the other hand, many cellular base stations have antennas arranged for maximum gain in the horizontal plane, so an airborne cellular telephone may in fact be unable to obtain a signal from any base station.

For truly global coverage, satellite telephones are available. However, these are expensive, and much heavier than a cellular telephone.

The use of portable radio telephones on board aircraft is currently discouraged, and in many cases forbidden, because of the perceived potential for interference with the aircraft's own electronic systems. A user may be able to use special facilities provided by the aircraft's operators, such as the service provided to several airlines by the applicant company under the Registered Trade Mark "Skyphone". This uses onboard terminals connected, through a satellite link between the aircraft and a ground station, to the telephone network. Another system, TFTS (terrestrial flight telephony system, marketed as "Jetphone"), operates in a similar manner, but uses a direct link between the aircraft and the ground station, without a satellite link. However payment for these services is generally at the point of use (or prepaid), and may be in a foreign currency. Calls made to the user's cellular telephone will not be successful unless the calls can be diverted to the telephone number of the onboard user terminal (which will generally not be known to the caller), and any special facilities offered by the user's cellular network will in general be unavailable. A user with his own cellular telephone account which, through "roaming" agreements between network operators, can be used in many different countries, would therefore prefer to continue to use his cellular telephone subscription when travelling within or between these countries on board an aircraft or other vehicle.

According to a first aspect of the invention there is provided apparatus for enabling a termination point of a first telecommunications system to initiate call diversion instructions in the switching system of a second telecommunications system such that calls initially directed to a telephone apparatus usable with the second telecommunications system are diverted to the said termination point in the first telecommunications system, the apparatus comprising means in the first telecommunications system for identifying the telephone apparatus from which calls are to be diverted and the termination point to which calls are to be diverted, and an interface means between the first telecommunications system and the switching system of the second telecommunications system, the interface means comprising:
means to indicate to the switching system that the telephone apparatus is in a specified operating condition, irrespective of the true operating condition of the telephone apparatus,
and means to generate an instruction to the switching system to divert calls, intended for the telephone apparatus, to the said termination point of the first telecommunications system when the telephone apparatus is indicated as being in the said predetermined operating condition.

A second aspect of the invention provides a first telecommunications system, arranged for interconnection with a second telecommunications system to allow calls initially directed to a telephone apparatus usable with the second telecommunications system to be diverted to a termination point in the first telecommunications system, the first telecommunications system having means for receiving, from the termination point, identification information relating to the telephone apparatus, means for receiving associated identification information relating to the termination point, means for transmitting the identification information to a network interface unit, means for receiving authentication data from the interface unit, and means for connecting calls to or from the termination point in response to said authentication data. In the preferred arrangement the first and second telecommunications systems are a satellite telephone system and a cellular telephone system respectively, the identification information being a user identity associated with the telephone apparatus, and the network address of the termination point.

A third aspect provides a network interface unit for interconnecting a first telecommunications system with a second telecommunications system such that calls directed to telephone apparatus configured for use with the second telecommunications system may be diverted to a termination point in the first telecommunications system, the interface unit comprising:
means for receiving data identifying a user and a termination point in the first network,
means to indicate to the switching system of the second telecommunication system that a telephone terminal associated with the user is in a specified operating condition, irrespective of the true operating condition of the telephone terminal, and means to generate an instruction to the switching system of the second telecommunications system to divert calls directed to the telephone user to the said termination point of the first telecommunications system when the telephone apparatus is indicated as being in the said predetermined operating condition. The telecommunications termination point may, for example, be a user terminal of a satellite telephone system. It may be provided with reading apparatus for reading an information carrier encoded with the user's identity. Such apparatus is commonly used for telephone terminals to which the public have access to allow calls to be charged to a user's credit card account, or an account with the service provider, or to deduct value from a stored value on the card.

In those cellular systems where the user identity is carried on a data carrier card transferable between telephone handsets, the reading apparatus may be arranged to read this carrier. In the "GSM" standard these cards are known as "Subscriber Identity Modules" or SIMs, and are either of standard credit card size (86mm x 54 mm) or rather smaller (14mm x 25mm), and may be transferred from one cellular telephone handset to another to allow the same telephone user account and directory number to be used with different handsets.

Another embodiment allows the onboard user terminal to co-operate with the complete cellular telephone. Although this requires a more complex interface between the cellular telephone and the user terminal, it allows the user to use the functionality of his own telephone, rather than having to familiarise himself with that of an unfamiliar satellite user terminal.

However, as standard on-board satellite telephone card readers may not be compatible with GSM "SIMs", or complete telephones, the user identity, or a code allowing its retrieval, may be carried on a special carrier compatible with the card reader to be used.

In the cellular telephone system of the preferred embodiment this interface unit is arranged to appear to the switching system as a typical radio base station control system, to which the mobile handset is currently working, although in fact no radio base stations are actually controlled by it. This will be referred to as a "Virtual" Base Site Controller. The switching system itself requires no modification: it merely registers that the user is working to the "Virtual" Base Site Controller and stores the user details in its "Visitor Location Register" (VLR) as it would for a mobile unit working to any real base site controller to which it is connected. The interface unit also generates a call diversion instruction, which will appear to the switching system to have come from the mobile handset, by way of the "Virtual" Base Site Controller. This call diversion instruction is set up in the switching system such that if the "Virtual" Base Site Controller responds to a call request directed to the mobile unit with a "busy line" response (or some other specified condition), calls are to be diverted, through normal network interconnects, to a specified directory number, namely that of the satellite termination point to which the user is connected. The interface unit does not in fact monitor the real condition of the user terminal, (which is switched off or operatively connected to the satellite network termination point by a non-radio link), but instead always returns the "line busy" signal to the switching system.

Preferably, the interface includes a store to record any diversion settings existing for the telephone apparatus prior to the diversion to the second network being set up. This allows these settings to be retrieved when the user disconnects from the first telecommunications system, so that they can be reinstated in the switching system of the second telecommunications system or transferred to a further telecommunications system if the telephone apparatus makes contact with a real radio base station, thereby initiating a handover procedure from the "Virtual" Base Site Controller to the real one.

Should a second call attempt be made, the switching system may be arranged to divert it to a predetermined number such as the user's voice mail. The interface unit may be arranged to transmit a message to the termination point to indicate that such a voice mail message has been sent.

If the user termination is in an aircraft or other vehicle connected to a ground station (by satellite or otherwise), it may move from the area covered by one satellite (or ground station) to that of another. In that case, the network address of the termination changes. To accommodate this, the interface may be provided with means to store the address of termination points in the first system, means to record changes to the said addresses transmitted to it from the first system, and means to modify the diversion instruction in the switching system when such a change takes place. Alternatively, the termination point may be arranged simply to repeat the setup process, causing the mobile unit to be re-registered with the interface unit, (which will not be apparent to the switching system, as it will perceive the same "virtual" base site controller), and to transmit a new call divert instruction to the revised address of the termination point.

The invention also provides a method of initiating, from a termination point of a first telecommunications system, call diversion instructions in the switching system of a second telecommunications system such that calls initially directed to a telephone apparatus usable with the second telecommunications system are diverted to the said termination point in the first telecommunications system, the method comprising the steps of;
in the first telecommunications system, identifying the telephone apparatus from which calls are to be diverted and the termination point to which calls are to be diverted,
indicating to the switching system of the second telecommunications system that the telephone apparatus is in a specified operating condition, irrespective of the true operating condition of the telephone apparatus,
and generating an instruction to the switching system to divert calls, intended for the telephone apparatus, to the said termination point of the first telecommunications system when the telephone apparatus is indicated as being in the said predetermined operating condition.

This aspect of the invention comprises several separate processes, some of which comprise further aspects of the invention. These processes interact to allow calls made to the telephone apparatus to be routed to the termination point.
The first part of the process is carried out, in the described embodiments, by a card reading device or similar apparatus associated with an onboard telephone termination point, which reads an information carrier encoded with the user's identity. The information carrier may be the part of a cellular telephone containing the user identity.

The second part of the process is a method according to a further aspect of the invention, for interconnecting a first telecommunications system with a second telecommunications system to allow calls initially directed to a telephone apparatus usable with the second telecommunications system to be diverted to a termination point in the first telecommunications system, comprising the steps of;
receiving, from the termination point, identification information relating to the telephone apparatus,
receiving associated identification information from the termination point,
transmitting the identification information to the second network,
receiving authentication data from the second network, and
connecting calls to or from the termination point in response to said authentication data.

This process is, in the described embodiments, carried out by the ground-based systems of the satellite telephone network.

The third part of the process is a method according to a further aspect of the invention, for interconnecting a first telecommunications system with a second telecommunications system such that calls directed to telephone apparatus configured for use with the second telecommunications system may be diverted to a termination point in the first telecommunications system, comprising the steps of:
generating an instruction to the switching system of the second telecommunications system to divert calls directed to the telephone apparatus to the said termination point of the first telecommunications system when the telephone apparatus is indicated as being in the said predetermined operating condition
receiving data identifying a user and a termination point in the first network,
indicating to the switching system of the second telecommunication system that a telephone terminal associated with the user is in a specified operating condition, irrespective of the true operating condition of the telephone terminal,
generating an instruction to the switching system of the second telecommunications system to divert calls directed to the telephone user to the said termination point of the first telecommunications system when the telephone apparatus is indicated as being in the said predetermined operating condition.

This process is preferably carried out by an interface unit emulating a base site controller of the cellular network.

Embodiments of the invention will now be described, by way of example with reference to the drawings, in which
Figure 1 is a schematic diagram showing the functional relationships between the systems which co-operate to form the invention
Figure 2 is a more detailed schematic diagram of the network termination and associated card reading equipment, which for illustrative purposes will be assumed to be on board an aircraft
Figure 3 is a diagram showing part of an alternative arrangement of network termination, arranged for co-operation with a cellular telephone handset
Figure 4 is a schematic diagram showing the functional relationships between the components of the fixed part of the first telecommunications system which co-operate in the invention,
Figure 5 is a schematic diagram of the switching system, interface unit, and associated parts of the second telecommunications system;
Figure 6 is a flow chart showing the process by which a diversion is set up in the second network to a termination connected to the first network
Figure 7 is a flow chart showing the process by which a call coming in to the second network is connected to a telephone connected to the first network
Figure 8 is a flow chart showing the process by which the second network restores the original settings for a telephone when it disconnects from the first network.

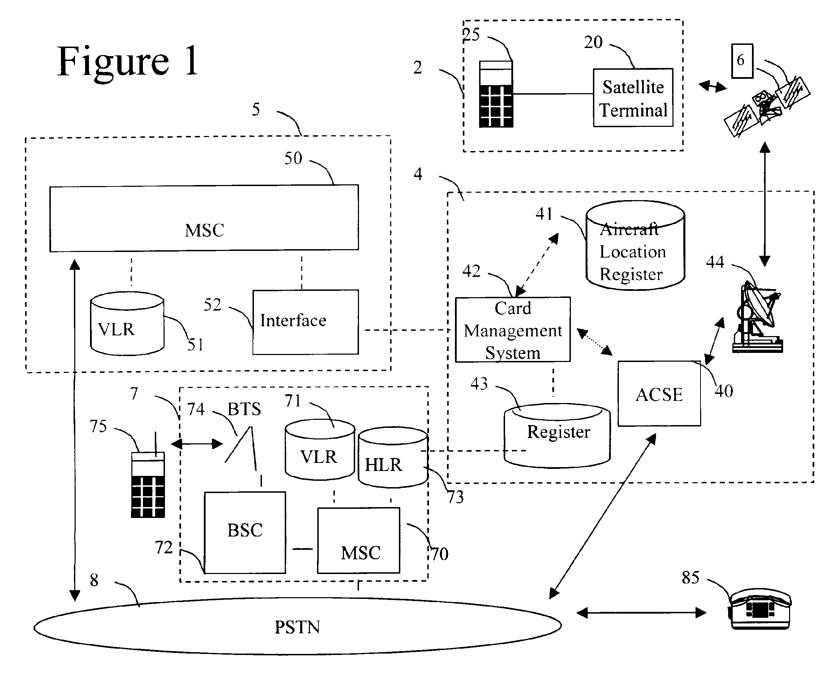

Figure 1 shows the general arrangement of the various components which co-operate in this embodiment of the invention. Note that traffic links (which can carry speech, data, etc) are shown as full lines, signalling links used only for call set up are shown as broken lines.

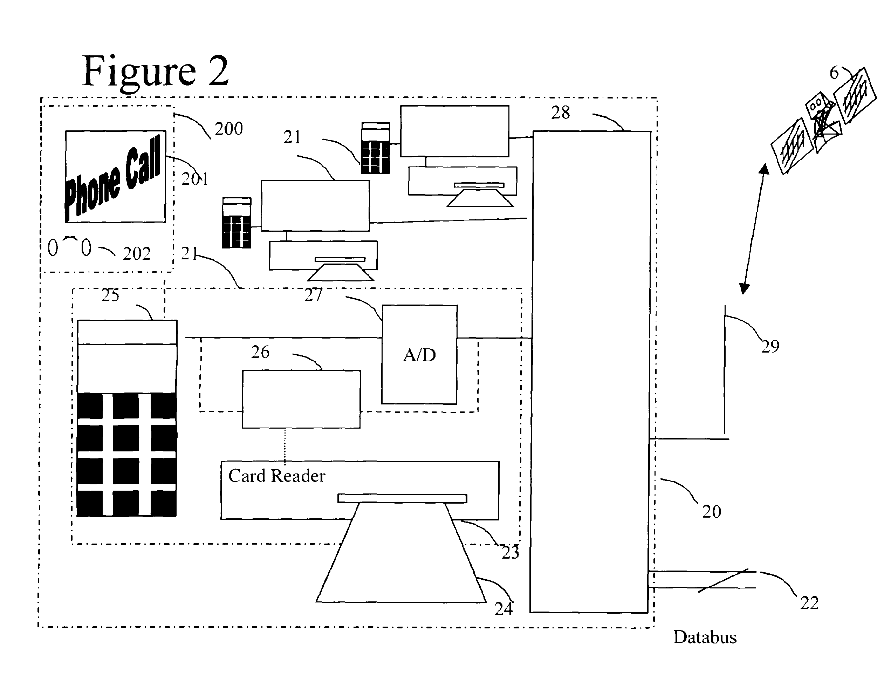

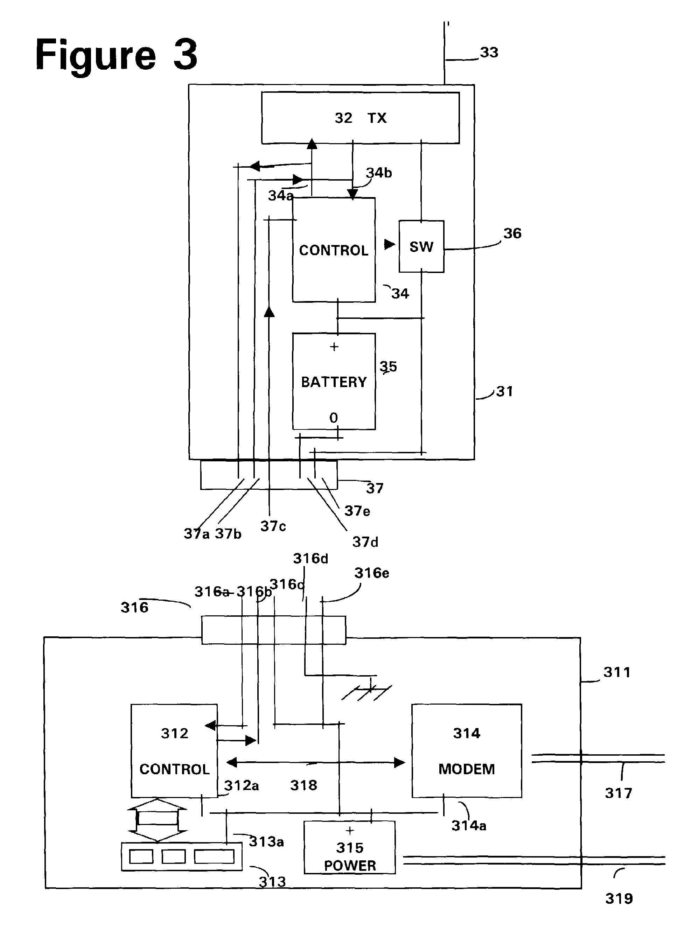

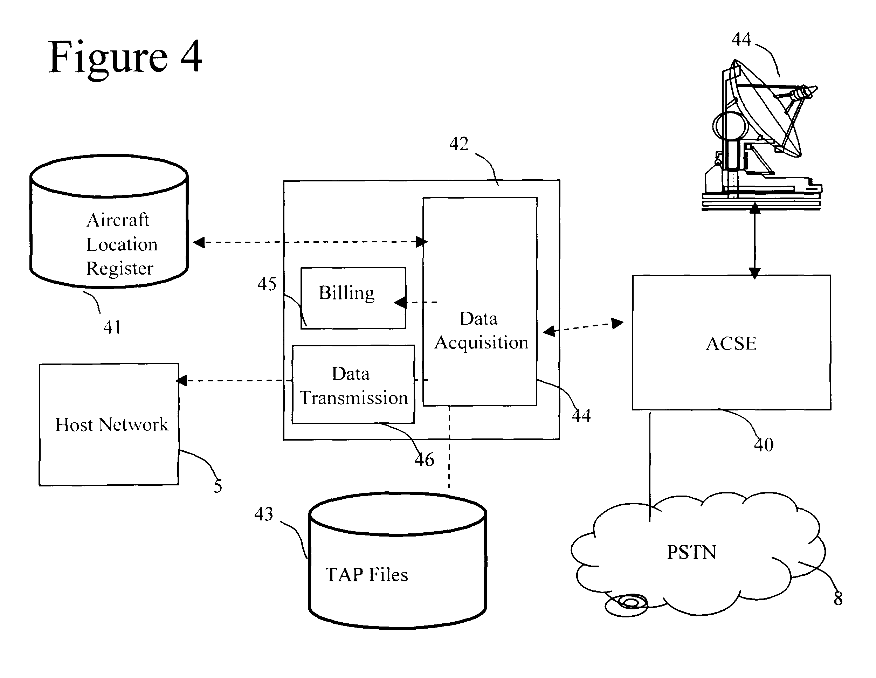

The onboard part 2 (shown in more detail in Figure 2) comprises a handset 25 (which, in the alternative arrangement of Figure 3, is the user's own cellular telephone handset 31), connected to a termination point 20 of the satellite network. The termination point 20 is in communication with a ground station 4, shown in more detail in Figure 4. In this embodiment, the communication link is made through an earth-orbiting satellite 6.

The principal components of the ground station 4 relevant to this invention are an antenna 44 which communicates, by way of the satellite 6, with the onboard system 2, an Access Control and Signalling Equipment (ACSE) 40 which carries out call switching functions to allow calls to be placed through the public switched telephone network (PSTN) 8 to other telephones 85, and a Card Management System 42 which identifies and authorises the use of individual terminals 20. Associated with the card management system there is an "aircraft location register" 41 which monitors the terminals currently served by each individual satellite, and modifies the functioning of the card management system when a terminal 20, for example on board an aircraft 2, moves from the coverage area of one satellite 6 (and its ground station 44) to another. There is also a register 43 of card identities, to provide a correspondence between the user identities used by the satellite terminal and the corresponding cellular telephone user identities (not necessary if the cellular telephone identity is read directly by the terminal 20, as will be described with reference to Figure 3), and to provide billing information.

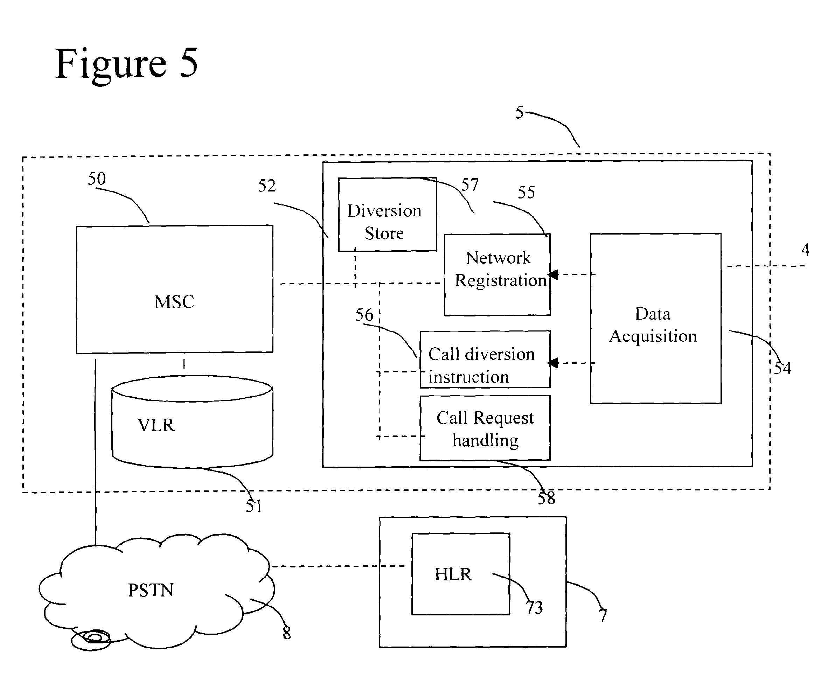

The card management system 42 interacts with an interface unit 52 of a "host" cellular telephone network 5, shown in more detail in Figure 5. This network 5 is connected to the public switched telephone network (PSTN) 8 and to other cellular networks 7 through a switching centre 50.

The cellular network 7 illustrates in simplified form the system architecture of a "GSM"-standard cellular radio system, and the terminology used in this standard. The network 7 has a switching system (MSC) 70 to allow connection of one or more base transceiver sites (BTS) 74, through one or more base site control systems 72, to the PSTN 8 and thus to other telephones 85. A mobile telephone 75 may establish radio contact with one of the base stations 74 in order to make and receive telephone calls. The network 7 also includes a "Visitor Location Register" 71, which maintains details of those cellular telephones 75 currently co-operating with the network 7. Mobile telephones according to the "GSM" standard are capable of co-operating with different networks ("roaming" between networks). To allow this to take place, when a mobile telephone 75 changes from one network to another, the network to which it has moved retrieves data from a "Home Location Register" 73 permanently associated with the handset 75. The network 7 in which the Home Location Register 73 associated with a given handset is to be found is identifiable from the handset's identity code. The Home Location Register also records the identity of the network 7 with which the mobile handset 75 is currently operating.

The "host" network 5 operates like conventional cellular network, but is provided with an interface unit 52, which interacts with the mobile switching centre 50 as a base site controller would. This interface unit 52 may be in addition to one or more base site controllers (not shown). The interface unit does not interact with any base transceiver sites or mobile handsets, but obtains user details (in particular the identity of a mobile handset) from the card management system 42 to allow it to appear to the switching centre 50, and the HLR 73 in the user's home network, that it is in radio communication with a mobile handset. It can then control the call forwarding instructions stored in the VLR 51, to cause incoming calls directed to that handset to be diverted, through the switching system 40 of the satellite network 4, to the satellite terminal 20.

Figures 2, 3 and 4 illustrate embodiments of the first network of the invention, applied to a satellite telephone system such as that provided by the applicant company under the Registered Trade Mark "Skyphone". Figure 2 shows a first embodiment of the mobile part for use with a standard card reader, whilst Figure 3 shows an alternative arrangement which allows a user to use his cellular telephone handset. Figure 4 shows the ground station.

The onboard system 20 shown in Figure 2 comprises a plurality of user terminals 21 (only one shown in detail), connected by a multiplex and radio interface unit 28 to an antenna 29 which provides radio communication with a satellite 6 or a ground station. Each user terminal 21 has a card reading unit 23 into which an intending user can insert a card 24 or other data carrier providing user identification data. The data may give details of the user's credit card account, or a special account for the use of the onboard telephone service. The card reader 23 may be adapted to read the SIM (Subscriber Identity Module) of a GSM-standard cellular telephone.

The user handset 25 provides the usual keypad, microphone and earphone to allow the user to make telephone calls. The user handset 25 and the card reader 23 are both connected to a processor 26 which converts data read from the card 24, and keystrokes input from the handset 25, into data signals for transmission over the radio link 29. It also provides identification data indicative of which of the terminals 21 it is. A further processor 27 performs analogue/digital conversion of speech signals from the handset 25.

The digitised signals from each terminal 21 are multiplexed and modulated onto a radio carrier in a central unit 28, and transmitted from the antenna 29. The antenna 29 also receives signals which are demodulated and demultiplexed in the unit 28. Data signals are processed in the processor 26, whilst digitised speech is converted to analogue speech in the analogue/digital convertor 27 and fed to the handset 25.

The central unit 28 also includes a connection to the databus 22 of the aircraft 2 giving access to aircraft parameters such as "weight-on-wheels", time to destination, altitude, etc. When a predetermined condition indicative of the impending end of a flight is met, the central unit 28 transmits a signal to the ground station to cause a deregistration signal to be transmitted to the card management system 42.

Because the onboard telephone system was originally designed for making outgoing calls, the handsets 25 provided in existing terminals 21 are not equipped with a suitable call alerting device. The handsets 25 could be modified to provide a buzzer or light to alert the user to an incoming call, but this may be distracting to other passengers. Alternatively, to avoid distracting other passengers on the aircraft, the telephone terminal 21 may be connected to an at-seat entertainment system 200, to provide an alert either through the earpieces 202 or on the screen 201.

Instead of the terminals 23, an alternative arrangement may be used as shown in Figure 3. In this arrangement each onboard terminal 23 is replaced by an onboard interface device 311 to which a user's own mobile radio telephone 31 can be connected electrically, thereby allowing the mobile telephone to be used without using its radio antenna. It is a modification of the system described in the applicant company's International Patent Application WO97/36442, published on 2^{nd} October 1997, to which the reader is referred for further details. In this modified version a GSM (Global System for Mobile communication) mobile telephone 31 comprises r.f. transceiver circuitry 32 coupled to an antenna 33, baseband signal processing and control circuitry 34, a rechargeable battery pack 35, a switch 36 and a socket 37. The processing and control circuitry 34 has a data output terminal coupled to both the r.f. transceiver circuitry 32 and a first contact 37a of the socket 37. A data input terminal 34b of the processing and control circuitry 34 is coupled to the r.f. circuitry 32 and a second contact 37b of the socket 37. A third contact 37c of the socket 37 is coupled to a control input of the processing and control circuitry 34. Fourth and fifth contacts 37d, 37e of the socket 37, which are respectively for 0V and +V power supply lines, power the telephone 31, and may also be arranged to recharge its batteries 35. The +V terminal of the battery pack 35 is also connected to the processing and control circuitry 34 and to an input terminal of the switch 36. The output terminal of the switch 36 is coupled to a +V input terminal of the r.f. circuitry 32. A control terminal of the switch 36 is coupled to an output of the processing and control circuitry 34.

A interface unit 311 comprises a control circuit 312, a user input unit 313, including a keypad and a display, a V.24 33.6 kbit/s modem 314, a power supply unit 315 and a plug 316. The plug 316 has five contacts 316a-316e which correspond to contacts 37a-7e of the socket 37 of the mobile telephone 31. The first contact 316a of the plug 316 is coupled to a data input terminal of the control circuit 312 and the second contact 316b of the plug 316 is coupled to a data output terminal of the control circuit 312. A bi-directional serial link 318 is provided between the control circuit 312 and the modem 314 for modem control and data signals. The third contact 316c and fifth contact 316e of the plug 316 are coupled to the +V output of the power supply unit 315. The fourth contact 316d of the plug 316 is coupled to the interface unit's 0V supply wiring. The user input unit 313 is coupled to the control circuit 312 for the input of user commands and the output of display control signals from the control unit 312 to the user input unit 313. The +V output of the power supply unit 315 is also coupled to +V input terminals 312a, 313a, 314a of the control circuit 312, the user input unit 313 and the modem 314. The modem 314 is coupled to a telephone line 317 and the power supply unit 315 is arranged to receive power from an electricity supply 319.

When the user wishes to connect to the interface unit 311, he connects the plug 316 of the interface unit 311 to the socket 37 on his telephone 31 by a cable (not shown). The voltage on the third contact 37c of the socket 37 is detected by the processing and control circuitry 34 which thereby determines that the telephone 31 has been connected to the interface unit 311. The connection of the battery 35 to the power supply 315 by way of the connections 37d/316d and 37e/316e also allows the battery to be recharged.

Once the processing and control circuitry 34 has determined that the telephone 31 has been connected to the interface unit 311, it sends a control signal to the switch 36, causing it to open, isolating the r.f. circuitry 32 from the battery pack 35 and the power supply 315 in the interface unit 311. The processing and control circuitry 34 also responds to the voltage on the third contact 37c of the socket 37 by selecting alternative control programs or constant data to allow for delays in the signal path from the telephone 31 to the controller 30 which are caused by the use of the satellite link 6 and the modems 314, 32.

In this arrangement, instead of the need for a separate card reader 23, the telephone 31 identifies itself to the telephone network 40/42 by generating its terminal identity code (IMSI in the case of a GSM telephone). The registration signal is not transmitted from the antenna 3 because the r.f. circuitry 32 is disabled. Instead, it is output to the interface unit 311 via the first contacts 37a, 316a of the socket 37 and plug 316.

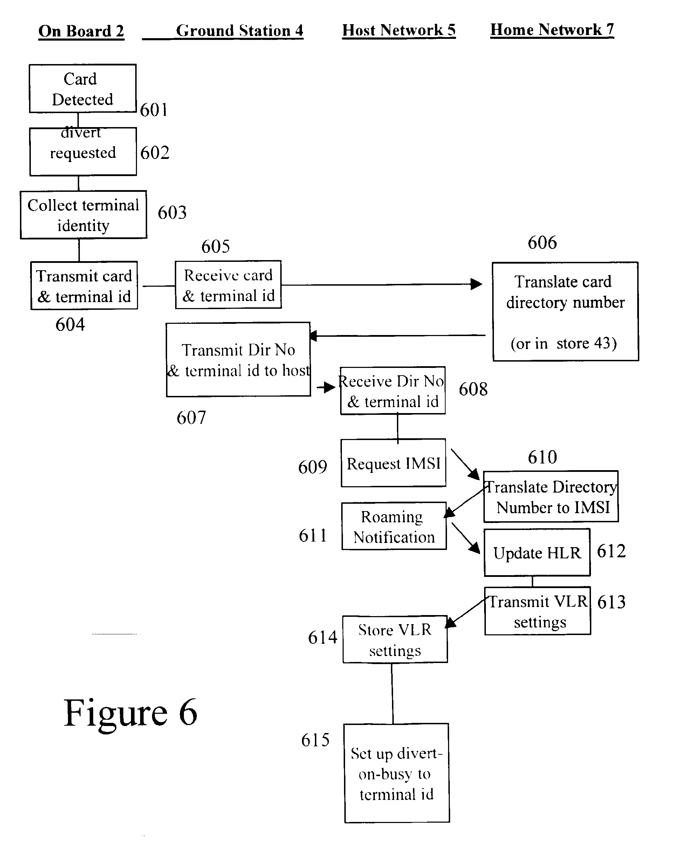

The operation of the onboard system will now be described with reference to Figure 6. When the card reader 23 or interface unit 311 detects the presence of a card 24 or handset 31 respectively, (step 601) it may generate a prompt to indicate to the user that he may wish to have calls diverted to the onboard system. If the user requires this service, he enters a code on the keypad of the handset 25, 31 which causes a divert request to be generated (step 602). The details from the card 23 (or SIM of the handset 31) are then passed to the processor 26 which also provides the identity of the terminal 21 (step 603) and transmits the data to the central unit 28. The central unit 28 then transmits the data to the ground station 4 (step 604). The further steps (605-616) in the process are carried out by the co-operating networks 4, 5 and will be described later.

The user may decide that he no longer wishes to have his calls diverted to the terminal 21. In order to cancel the diversion instruction he may enter a special code on the keypad of the handset 25, 31. Disconnect codes may also be generated in the central unit 28 for all the termination points 21, either by the cabin crew or automatically in response to a signal detected on the aircraft's databus 22 which is indicative of the imminent end of the journey, such as weight on wheels, low altitude, or time remaining to destination as determined by the aircraft's flight management system. The disconnect instruction is transmitted (step 801) by way of the switching system 40 in the ground station 4, to the interface unit 52 whose operation (steps 802 to 805) will be described later.

The Ground Station 4 shown in Figure 4 has a radio antenna system 44 for communicating with the terminal 20, through a satellite link 6 or otherwise. Signals are handled by an Access Control Signalling Equipment (ACSE) 40 which carries out switching functions to route calls to or from the public switched telephone network (PSTN) 8. An aircraft location register 41 stores identification details for all aircraft 2 (and therefore all terminals 21) currently served by the ground station 4. When an aircraft passes into the control of a different ground station (or satellite in a satellite system) the aircraft location register in the second ground station acquires the aircraft details.

A card management system 42 comprises a data acquisition unit 44 which reads data transmitted from the card reader 24 to identify the type of card, confirm the user's account details and arrange billing for any calls made, through a billing system 45 which raises invoices, or interacts with the systems of a credit card operator or bank.

In the existing onboard systems a user cannot receive calls, unless the caller knows the unique "AES" number of the handset 20. This is unlikely, as the number depends on the identity of the plane, the seat, and the serving satellite or base station.

The conventional ground station equipment just described is augmented in the present embodiment by an interface with the Home Location Register 73 of each network 7 whose subscribers are to be given access to the service, which stores a concordance between the card identities and the card-holder's cellular radio telephone number (MSISDN: mobile systems integrated services data network number), on request from the data acquisition unit, which is arranged to recognise the card identities which require such translation. This arrangement allows the existing card readers 23 to be used on board the aircraft, without modification. However, if the terminal (e.g. 311) can read users' mobile subscriber identities directly, the store 43 can be omitted.

Billing information is also returned to the user's home network 7. In a preferred embodiment the concordance is supplied to a register 43 in the ground station by the operator of user's home network 7, when the network operator provides the user with the card. The operator of the home network 7 also records the concordance in its own Home Location Register 73.

The operation of the ground station will now be described with reference to Figure 6. The data acquisition unit 45, receives the card details from the reader 23 (see steps 601 to 604 already discussed) and if it identifies as those details as corresponding to a cellular user (step 605), it retrieves the cellular user identity from the store 43 containing this concordance, or from the HLR 73 of the user's home network, (step 606). (This step can be omitted if the user's mobile network identity is read by the onboard apparatus 20).

A data transmission unit 46 then generates a signal for transmission of the cellular user identity, together with the identity of the terminal 20, to the cellular network 5 acting as host to the interface (step 607). This host network 5 will, in general, not be the same as the user's home network 7. The further steps (608 to 616) in this process will be described later, with reference to Figure 5

If a cancellation signal is received from the aircraft in respect of a given terminal 20, (step 801) the data transmission unit 46 transmits a "cancellation" signal to the host network 5. As already discussed, the cancellation signal may be generated either for an individual handset 21, by its user dialling a special code, or for all handsets as the result signals received by the radio interface unit 28 over the aircraft's databus 22 indicative of the imminent end of the flight.

An embodiment of the host network 5 of the invention is shown in Figure 5. Its operation will be discussed with reference to Figures 6, 7 and 8 In this network 5 an interface unit 52 is provided, which is arranged to appear to the switching system 50 as if it is a normal base station of the cellular radio system.

In order to do this, the interface unit 52 is provided with a data acquisition unit 54 which receives from the card management system 42 of the ground station 4 the identity (IMSI) of the cellular telephone it is to represent, and the AES identity of the onboard terminal 20 (step 608, Figure 6). Mobile telephones have two identification codes: the directory number (MSISDN) and the actual SIM identity (IMSI). In practice, for security reasons, the IMSI is not made generally known, and a user is identified by his MSISDN unless the SIM itself is used. The card concordance store 43 will therefore generally provide the MSISDN, and not the IMSI. Therefore, unless the SIM is used in the card reader 23, or the user's telephone is used in the arrangement of Figure 3, (in which case no concordance is required) the data acquisition unit will receive the MSISDN, and not the IMSI. However, it is possible to obtain the IMSI from the Home Location Register 73. To do this, the interface unit 52 transmits a "request for routing information", according to the GSM standard, using the MSISDN (step 609). This signal is provided under the GSM standard in order that routing information for data messages may be obtained for a destination for which only the MSISDN number is known. The HLR 73 responds to such a request with a signal which includes the IMSI corresponding to the MSISDN in the request (step 610).

The telephone identity (IMSI), whether obtained directly from the card reader 23 or handset 31, or indirectly as just described, is passed to a network registration unit 55 which exchanges signals with the mobile switching centre 50 in the same way that a real cellular telephone would do. The mobile switching centre therefore informs the user's Home Location Register 73 that the mobile telephone is now registered with the network 5 (step 611). The Home Location Register 73 records that the mobile handset is now registered with host MSC 50 (step 612).

It should be noted that, although registered with the host MSC 50, the user's mobile handset is not operatively connected to the host MSC 50 - in fact the mobile handset may be switched off to allow the card 24 to be used, or it may be connected to a user terminal 311. The user may be in an aircraft, anywhere in the world within the coverage area of the satellite network.

The user's details, including any diversion instructions, are sent by the Home Location Register 73 to the network's VLR 51 (step 613). A store 57 records a copy of the details of these diversion instructions (step 614).

Conventionally, any incoming calls for a mobile user are sent in the first instance to the user's home network 7, and the HLR 73 provides information to identify the MSC 50 where the mobile handset can currently be found. Consequently, in the present arrangement, any incoming calls intended for the mobile user will now be directed to the network 5, as the mobile user is currently registered there.

The data acquisition unit 54 in the interface 52 now passes the directory number of the termination point 21 to a call diversion instruction unit 56, which generates a "divert on busy" instruction to the VLR 51 (step 615). This is a standard divert arrangement, and operates such that should the mobile unit appear to be engaged on another call when a call attempt is made to it, the call attempt is diverted to a specified directory number, in this case the termination point 21. This diversion instruction replaces any previous instruction held in the VLR 51.

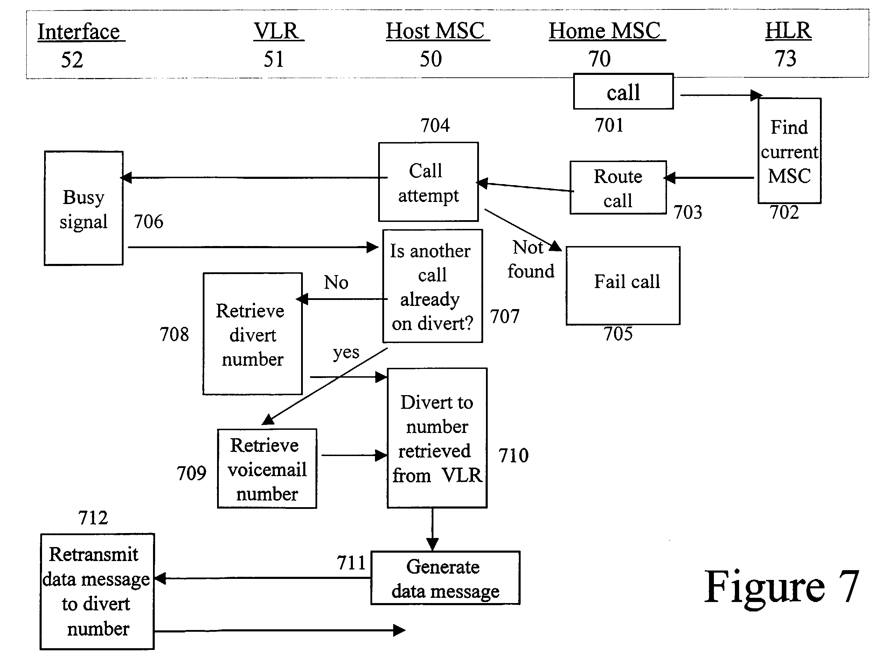

Of course, there is in fact no mobile telephone connected to the interface unit 52, and therefore it is unable to connect incoming calls to the mobile telephone in the conventional way, or to identify the current true operating condition (switched off, busy, ready for calls, etc) of the mobile handset. Instead, the system responds to a call attempt as will now be described with reference to Figure 7.

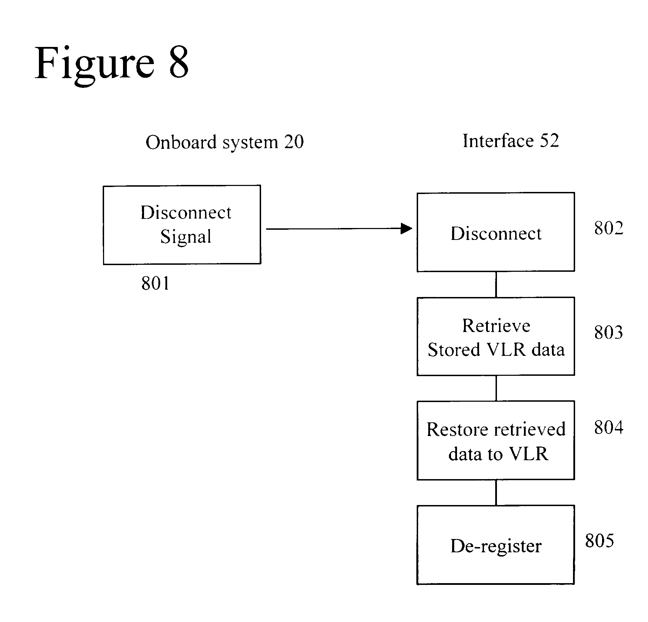

When a call attempt is made (step 701), the home MSC to which the call is initially routed obtains from the HLR 73 the current location of the mobile telephone (step 702), and on receiving the identity of the host MSC 50 (step 703), directs the call there (step 703). The host MSC 50 in turn transmits the call attempt to the currently serving base station, which is in fact the interface unit 52 (step 704). If the disconnect procedure (to be described later with reference to Figure 8) has been carried out, the call will fail (step 705) and a signal is transmitted back to the home MSC 70. Otherwise, call attempts received by the interface unit 52 are handled by a call request handling unit 58, which automatically returns a "busy" signal to any such request (step 706). The MSC 50, on receiving the "busy" signal, checks whether any incoming call currenetly in progress to that mobile handset has already been diverted (step 707). (This is a standard procedure, done to ensure that call diversion will actually succeed) If there is no such diverted call in progress, the MSC 50 retrieves the diversion information from the VLR 51 (step 708) allowing it to route the call through the PSTN 8 to the user terminal 21 (step 710).

If a second call attempt is made, the MSC 50 will identify that the divert instruction will not work as it is currently handling a diverted call to that number (step 707). The normal default condition in such cases is to arrange for the second call to be diverted to the user's voicemail address (not shown) in his home network 7, (step 709, 710). The user is also sent a message to inform him of the new voicemail message. This message would normally be sent to the mobile unit, which appears to the MSC 50 to be co-operating with the interface unit 52, so the MSC 50 transmits the data message to the interface unit 52 (step 711). In order to inform the user of the new voice mail message, the interface unit 52 now regenerates the data message for forwarding to the user terminal 21 via the MSC 50, PSTN 8, and satellite system 4, 6 (step 712) either during the call or after it ends. As with the call alerting, the message may be displayed using the in flight entertainment system 200

As the termination 21 is itself mobile, being on board an aircraft, call routing to that termination may require revision from time to time. For example, the "Inmarsat" satellite system comprises five geostationary satellites, which each provide cover for part of the earth's surface. These areas of coverage overlap to a large extent, but nevertheless on a long flight the aircraft may pass out of the area covered by one satellite into that served by another. This causes a small but significant change in the network address of any terminal 21 on board the aircraft. The aircraft location register 41 monitors the identity of all aircraft currently being handled by the ground station 4. When it acquires a new aircraft, it instructs the card management system 42 send an instruction to the interface unit 5 in the host network. The call diversion instruction unit 56 responds by transmitting a new call diversion instruction to the VLR 51, so that any further incoming call attempts are diverted to the new network address of the terminal. Note that the diversion store 57 is not updated. Note also that this does not affect calls already in progress. There is usually sufficient overlap in coverage areas that handover from one satellite or base station to another can be arranged to take place when no call is in progress.

Since the system causes the generation of an IMSI from the interface unit 52, instead of from the mobile telephone to which that IMSI relates, the mobile telephone should be switched off, or connected to an onbaord interface device 311 which disconnects the radio circuits, to prevent the network detecting the IMSI in two places, which would disrupt the call routing processes in the HLR 73 and elsewhere. (Generally, the detection of the same IMSI from two sources causes the HLR 73 to disconnect both callers as a fraud prevention measure). If the user is on board an aircraft, he should not be using his mobile handset in the conventional manner, and so there should be no problem. However, if the user, having left the aeroplane, switches on his telephone 75 when the network 5 has not reported a loss of the mobile unit from its own network, the mobile unit may be perceived by the HLR 73 as being registered with two networks at once. To avoid this possibility, a disconnection procedure is followed ass described with reference to Figure 8.

To stop calls being diverted to the user termination point 21, and restore the original call diversion settings, a disconnection signal is transmitted from the user terminal system 20 to the card management system 42 and thus to the interface unit 52 (step 801). The disconnection signal may be activated by a special code entered by the user, or it may be generated automatically by data indicative of the imminent end of the flight. Note that this disconnection signal merely controls the interface 52 - it has no effect on calls in progress, which is routed from the MSC 5 by way of the PSTN 8.

The disconnect instruction is received by the interface unit 52 (step 802) and causes the call diversion instruction unit 56 to retrieve the call diversion data stored in the store 57 (step 803) and generate a call diversion instruction restoring the original settings in the VLR 53 (step 804). This ensures no further calls are routed to the onboard terminal 21. I

The interface unit 52 next causes the network registration unit 55 in the interface unit 5 to instruct the MSC 50 that the user is no longer connected to the network 5 (step 805). This allows the mobile unit to register with another network 7 in the normal way. Call attempts to the user number will continue to be routed by the Home HLR 73 to the MSC 50 with which the mobile unit was most recently registered, but as the MSC cannot now find the mobile unit, any such incoming call will return a "not found" signal to the home MSC 70 (step 705) which will divert the call according to any diversion instructions set up, or fail the call. Alternatively, the host MSC 50 may handle the diversion itself if the mobile unit is "not found", using the original diversion instructions now in the VLR 51, having been retrieved from the store 57 (step 804 above).

Having left the aircraft, the user may switch on his mobile telephone 75, which will register with the local network (e.g.7) and will retrieve the original divert information from the HLR 73 (note that in general the HLR 73 will not be in the same network), and will cause all data relating to the user to be deleted from the VLR 51 in the "host" network 5.

## Claims

1. Apparatus for enabling a termination point of a first telecommunications system to initiate call diversion instructions in the switching system of a second telecommunications system such that calls initially directed to a telephone apparatus usable with the second telecommunications system are diverted to the said termination point in the first telecommunications system, the apparatus comprising:
means in the first telecommunications system for identifying the telephone apparatus from which calls are to be diverted and the termination point to which calls are to be diverted,
and an interface means between the first telecommunications system and the switching system of the second telecommunications system, the interface means comprising:
means to indicate to the switching system that the telephone apparatus is in a specified operating condition, irrespective of the true operating condition of the telephone apparatus,
and means to generate an instruction to the switching system to divert calls, intended for the telephone apparatus, to the said termination point of the first telecommunications system when the telephone apparatus is indicated as being in the said predetermined operating condition.

2. Apparatus according to claim 1, wherein the termination point in the first network is provided with reading apparatus for reading an information carrier encoded with the user's identity

3. Apparatus according to claim 2, wherein the reading apparatus is arranged to co-operate with the part of a cellular telephone containing the user identity

4. Apparatus according to any preceding claim, wherein the termination point in the first network is associated with an audio or visual display apparatus, and is provided with means for detecting a ringing tone delivered to the termination point, means for generating a signal for transmission to the display apparatus in response to said ringing tone, in order to cause the display apparatus to display a call alert indication.

5. A first telecommunications system, arranged for interconnection with a second telecommunications system to allow calls initially directed to a telephone apparatus usable with the second telecommunications system to be diverted to a termination point in the first telecommunications system, the first telecommunications system having means for receiving, from the termination point, identification information relating to the telephone apparatus, means for receiving associated identification information relating to the termination point, means for transmitting the identification information to a network interface unit, means for receiving authentication data from the interface unit, and means for connecting calls to or from the termination point in response to said authentication data.

6. A network interface unit for interconnecting a first telecommunications system with a second telecommunications system such that calls directed to telephone apparatus configured for use with the second telecommunications system may be diverted to a termination point in the first telecommunications system, the interface unit comprising:
means for receiving data identifying a user and a termination point in the first network,
means to indicate to the switching system of the second telecommunication system that a telephone terminal associated with the user is in a specified operating condition, irrespective of the true operating condition of the telephone terminal,
and means to generate an instruction to the switching system of the second telecommunications system to divert calls directed to the telephone user to the said termination point of the first telecommunications system when the telephone apparatus is indicated as being in the said predetermined operating condition.

7. Apparatus according to claim 1, 2, 3, 4 or 6, wherein the interface includes a store to record any diversion settings existing for the telephone apparatus prior to the diversion to the second network being set up.

8. Apparatus according to claim 7, comprising means for retrieving the said settings when the user disconnects from the first telecommunications system, and reinstating them in the switching system of the second telecommunications system.

9. Apparatus according to claim 1, 2 ,3, 4, 6, 7 or 8, comprising means in the second telecommunications system for detecting a second call attempt when a first call attempt has been diverted to the said termination point, diverting said second call attempt to a predetermined destination, and means for transmitting a signal to the said termination point indicative of the second attempt.

10. Apparatus according to claim 1, 2 3, 4, 6, 7, 8 or 9, wherein the interface has means to store the addresses of termination points in the first system, means to record changes to the said addresses transmitted to it from the first system, and means to modify the diversion instruction in the cellular switching system when such a change takes place.

11. Apparatus according to any preceding claim, wherein the first telecommunications system is a satellite telephone system.

12. Apparatus according to any of claims 1, 2, 3, 4, 6, 7, 8, 9, 10 or 11 wherein the second telecommunications system is a cellular radio system

13. Apparatus according to claim 12 wherein the interface means is arranged to appear to the switching system as one of the base stations of the cellular radio system, and through which the cellular telephone is currently operating.

14. Method of initiating, from a termination point of a first telecommunications system, call diversion instructions in the switching system of a second telecommunications system such that calls initially directed to a telephone apparatus usable with the second telecommunications system are diverted to the said termination point in the first telecommunications system, the method comprising the steps of;
in the first telecommunications system, identifying the telephone apparatus from which calls are to be diverted and the termination point to which calls are to be diverted,
indicating to the switching system of the second telecommunications system that the telephone apparatus is in a specified operating condition, irrespective of the true operating condition of the telephone apparatus,
and generating an instruction to the switching system to divert calls, intended for the telephone apparatus, to the said termination point of the first telecommunications system when the telephone apparatus is indicated as being in the said predetermined operating condition.

15. Method according to claim 14, wherein the termination point in the first network reads an information carrier encoded with the user's identity

16. Method according to claim 14, wherein the reading apparatus to co-operates with the part of a cellular telephone containing the user identity

17. Method according to any preceding of claims 14, 15 or 16, wherein when ringing tone is delivered to the termination point, a signal is transmitted to an audio or visual display apparatus associated with the termination point, to cause the display apparatus to display a call alert indication.

18. A method of interconnecting a first telecommunications system with a second telecommunications system to allow calls initially directed to a telephone apparatus usable with the second telecommunications system to be diverted to a termination point in the first telecommunications system, comprising the steps of;
receiving, from the termination point, identification information relating to the telephone apparatus,
receiving associated identification information from the termination point,
transmitting the identification information to the second network,
receiving authentication data from the second network, and
connecting calls to or from the termination point in response to said authentication data.

19. A method of interconnecting a first telecommunications system with a second telecommunications system such that calls directed to telephone apparatus configured for use with the second telecommunications system may be diverted to a termination point in the first telecommunications system, comprising the steps of:
generating an instruction to the switching system of the second telecommunications system to divert calls directed to the telephone apparatus to the said termination point of the first telecommunications system when the telephone apparatus is indicated as being in the said predetermined operating condition
receiving data identifying a user and a termination point in the first network,
indicating to the switching system of the second telecommunication system that a telephone terminal associated with the user is in a specified operating condition, irrespective of the true operating condition of the telephone terminal,
generating an instruction to the switching system of the second telecommunications system to divert calls directed to the telephone user to the said termination point of the first telecommunications system when the telephone apparatus is indicated as being in the said predetermined operating condition.

20. Method according to claim 14, 15, 16, 17, or 19 comprising the step of recording any diversion settings existing for the telephone apparatus prior to the diversion to the second network being set up.

21. Method according to claim 20, comprising the steps of retrieving the said settings when the user disconnects from the first telecommunications system, and reinstating them in the switching system of the second telecommunications system.

22. Method according to claim 14, 15, 16, 17, 19, 20 or 21, wherein, if the second telecommunications system detects a second call attempt when a first call attempt has been diverted to the said termination point, said second call attempt is diverted to a predetermined destination, and a signal is transmitted to the said termination point indicative of the second attempt.

23. Method according to claim 14, 15, 16, 17, 19, 20, 21 or 22, comprising the steps of storing the addresses of termination points of the first system, recording changes to the said addresses, and modifying the diversion instructions in the interface unit switching system when such a change takes place.

24. Method according to any of claims 14 to 23 wherein the first telecommunications system is a satellite telephone system.

25. Method according to any of claims 14 to 24 wherein the second telecommunications system is a cellular radio system and the telephone apparatus is the part of a cellular telephone containing the user identity

26. Method according to claim 25 wherein the interface means appears to the switching system as one of the base stations of the cellular radio system, and through which the cellular telephone is currently operating.
